# EUROPÄISCHE PATENTSCHRIFT

(11) **EP 1 761 421 B1**
(45) Veröffentlichungstag und Bekanntmachung des Hinweises auf die Patenterteilung: **16.01.2008**
(21) Anmeldenummer: 05753183.2
(22) Anmeldetag: 22.06.2005
(51) Int. Cl.: B60S 1/34

(54) **GELENK ZWISCHEN EINEM WISCHHEBEL UND EINEM WISCHHEBELTRÄGER SOWIE WISCHARM MIT EINEM SOLCHEN GELENK**
ARTICULATION BETWEEN A WIPER ARM AND A WIPER ARM MOUNTING, AND A WINDSCREEN WIPER HAVING SUCH AN ARTICULATION
ARTICULATION ENTRE UN BRAS D'ESSUYAGE ET UN SUPPORT DE BRAS D'ESSUYAGE ET BRAS D'ESSUIE-GLACE EQUIPE D'UNE TELLE ARTICULATION

(30) Priorität: 29.06.2004 DE 102004031322
(43) Veröffentlichungstag der Anmeldung: 14.03.2007
(73) Patentinhaber: Valeo Wischersysteme GmbH, 74321 Bietigheim-Bissingen (DE)
(72) Erfinder: WAIBLE, Siegfried, 74223 Flein (DE)
(74) Vertreter: Jahn, Wolf-Diethart
(86) Internationale Anmeldenummer: PCT/EP2005/006734
(87) Internationale Veröffentlichungsnummer: WO 2006/000394

(56) Entgegenhaltungen:
- DE-A1- 4 333 554
- FR-A- 1 265 101
- GB-A- 2 004 734

## Beschreibung

Die Erfindung bezieht sich auf ein Gelenk zwischen einem Wischhebel und einem Wischhebelträger eines Wischarms gemäß Oberbegriff Patentanspruch 1 sowie auf einen Wischarm mit einem derartigen Gelenk gemäß Oberbegriff Patentanspruch 13.

Wischerarme von Scheibenwischern, im Wesentlichen bestehend aus dem an einer Wischerwelle vorgesehenen Wischhebelträger oder Befestigungsteil für den Wischarm und dem Wischhebel, der für ein Schwenken zwischen einer Arbeitsstellung und einer Servicestellung gelenkig mit dem Wischhebelträger verbunden und an dem das übliche Wischblatt befestigt ist, sind in verschiedenen Ausführungen bekannt. Bekannt sind insbesondere auch solche Ausführungen, die eine Montage des Wischhebels am Wischhebelträger im Bereich des Gelenks ermöglichen, und zwar durch radiales Aufschieben des Wischhebels mit seitlich offenen Lageröffnungen auf einen am Wischhebelträger vorgesehenen Gelenkbolzen. Die Lageröffnungen sind hierbei in Richtung der Längserstreckung des Wischhebels zu dem gelenkseitigen Ende dieses Hebels hin offen. Durch eine zwischen dem Wischhebel und dem Wischhebelträger wirkende und zum Anpressen des Wischblattes gegen die Fahrzeugscheibe dienende Anpressfeder ist die gelenkige Verbindung zwischen dem Wischhebel und dem Wischhebelträger gesichert.

Bekannt sind weiterhin Wischarme (DE 37 09 994 A1, EP 0 845 394 B1), bei denen umgekehrt zwei parallele Lageröffnungen am Wischhebelträger für den Lagerzapfen am Wischhebel vorgesehen sind. Die Lageröffnungen sind wiederum zum radialen Einschieben des Lagerzapfens seitlich offen, und zwar zum Wischhebel hin und bei in der Arbeitsstellung befindlichem Wischhebel wiederum etwa in Richtung der Längserstreckung dieses Hebels.

Da bei den bekannten Ausführungen die Lageröffnungen zumindest bei in der Arbeitsstellung befindlichem Wischhebel jeweils in Richtung der Längserstreckung des Wischhebels offen sind, besteht bei seitlicher Krafteinwirkung auf den Wischhebel, z.B. in Waschanlagen oder aber bei während des Betriebes des Scheibenwischers zwischen dem Wischhebel und dem Wischhebelträger auftretenden erhöhten Kräften, die Gefahr eines Lösens des Wischhebels vom Wischhebelträger, und zwar durch Herausdrücken oder Herausziehen des wischerhebelseitigen Gelenkteils des Gelenks aus dem Gelenkteil am Wischhebelträger. Um dieses Problem zu lösen wurde zwar u.a. vorgeschlagen, am Wischhebel einen Sicherungssteg vorzusehen, der in der Arbeitsstellung des Wischhebels den Wischhebelträger im Bereich einer Ausnehmung hintergreift, dies bedeutet aber eine aufwendigere Konstruktion und/oder Fertigung.

FR-A-1 265 101 offenbart den Oberbegriff des Anspruchs 1.

Aufgabe der Erfindung ist es, ein Gelenk aufzuzeigen, welches unter Beibehaltung des Vorteils einer vereinfachten Montage des Wischhebels am Wischhebelträger und bei einfacher konstruktiver Ausbildung die Gefahr eines Lösens bei seitlicher Krafteinwirkung auf den Wischhebel deutlich verringert. Zur Lösung dieser Aufgabe ist ein Gelenk entsprechend dem Patentanspruch 1 ausgebildet. Ein Wischarm ist Gegenstand des Patentanspruches 13.

Bei dem erfindungsgemäßen Gelenk ist die wenigstens eine Lageröffnung für die einfache Montage des Wischhebels ebenfalls randseitig offen, wobei dieser offene Bereich der Lageröffnung in einer radial zur Achse der Lageröffnung verlaufenden Richtung offen ist, die nicht in Richtung der Längserstreckung des in der Arbeitsstellung befindlichen Wischhebels orientiert ist, sondern quer zu dieser Längserstreckung, beispielsweise zur Unterseite Wischhebels. Dadurch weist die Lageröffnung beidseitig ihres radial offenen Bereiches solche Randbereiche auf, die sich in Richtung der Längserstreckung des Wischhebels bezogen auf die Achse der Lageröffnung diametral gegenüberliegen. Diese beiden Randbereiche stützen sich derartig auf dem Gelenkbolzen ab, dass über diese beiden Lageröffnungsrandbereiche Kräfte, die seitlich auf den Wischhebel einwirken, besonders wirksam auf den Wischhebelträger abgeleitet werden können.

Bei einer bevorzugten Ausführungsform der Erfindung ist zusätzlich ein Überrastmechanismus vorgesehen, der ein Schwenken des Wischhebels aus der Arbeitsstellung in die Servicestellung nur durch Überrasten, d.h. erst durch Anwenden einer zusätzlichen höheren Rastkraft zulässt. Hierdurch ist u. a. wirksam verhindert, dass der Wischhebel durch äußere Krafteinwirkung, beispielsweise bei einem Fahren mit höherer Geschwindigkeit durch Kräfte des Fahrtwindes, von der Fahrzeugscheibe abhebt.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter perspektivischer Darstellung einen Wischarm gemäß der Erfindung bestehend aus dem aus Kunststoff gefertigten Wischhebel, dem Wischhebelträger und dem zwischen Wischhebel und Wischhebelträger vorgesehenen Gelenk;
- Fig. 2: in vereinfachter Teildarstellung einen Längsschnitt des Wischarmes im Bereich des Gelenks;
- Fig. 3: in perspektivischer Darstellung den Wischhebelträger, teilweise abgeschnitten;

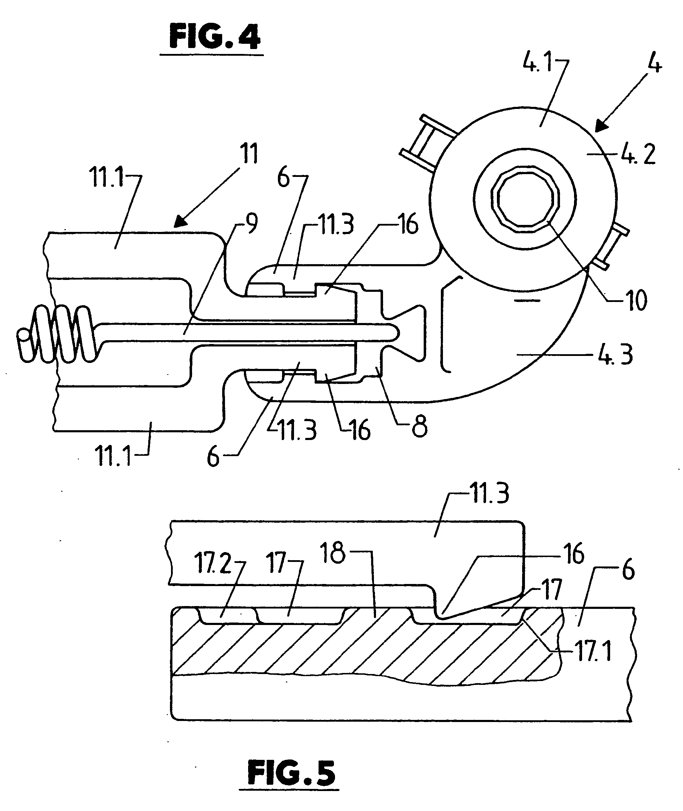

- Fig. 4: in Teildarstellung eine Unteransicht des Wischarmes im Bereich des Gelenks bei in Arbeitsstellung befindlichem Wischhebel;
- Fig. 5: in vergrößerter schematischer Darstellung ein Rastelement und eine Gegenrast des zwischen dem Wischhebel und dem Wischhebelträger vorgesehenen Überrastmechanismus;

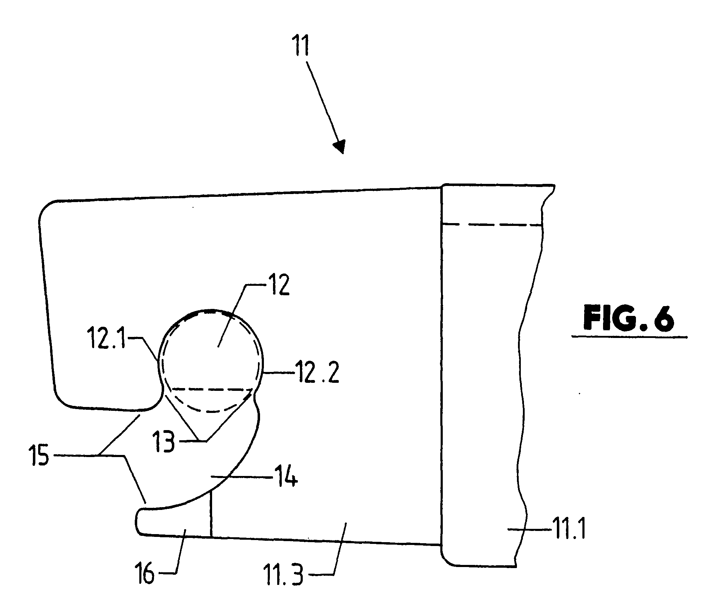

- Fig. 6: in Einzeldarstellung einen Wandabschnitt des wischhebelseitigen Gelenkteils mit der dortigen Lageröffnung.

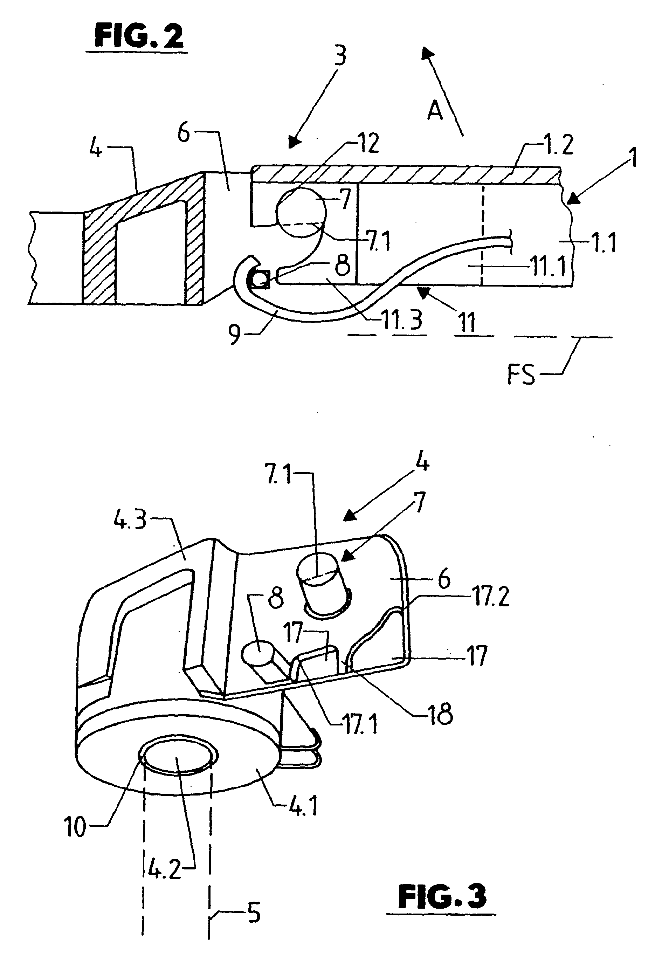

In den Figuren ist 1 ein Wischhebel eines Wischarms 2 einer Scheibenwischeranlage für eine in der Figur 2 mit der unterbrochenen Linie schematisch angedeuteten Fahrzeugscheibe FS, beispielsweise Fahrzeugfront- oder Heckscheibe. Der Wischhebel 1 ist über ein Gelenk 3 gelenkig mit einem Wischhebelträger 4 verbunden, welcher ebenfalls Bestandteil des Wischarms 2 ist und als Befestigungsteil des Wischarms 2 auf einer in Figur 3 mit unterbrochenen Linien 5 angedeuteten und für die Schwenkbewegung des Wischhebels 1 reversierend angetriebenen Wischerwelle 5 befestigbar ist.

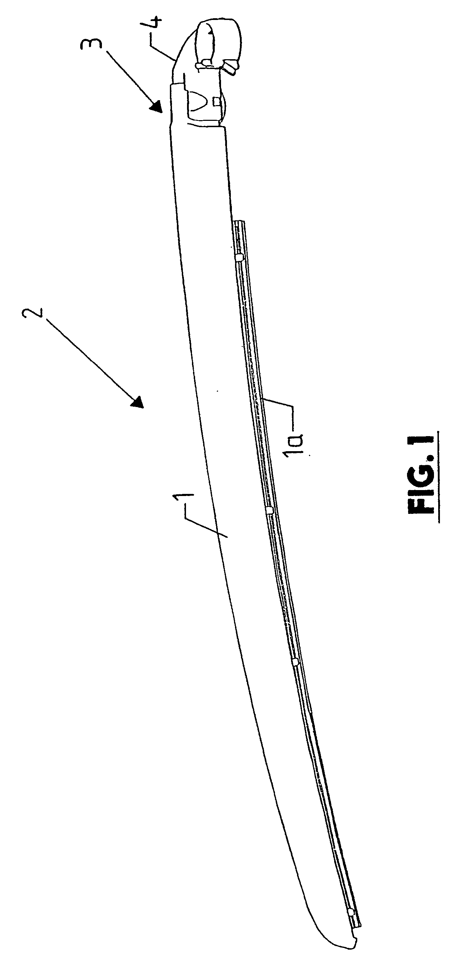

Mit dem Gelenk 3 ist der Wischhebel 1 aus seiner in der Figur 1 dargestellten Arbeitsstellung, in der er mit seiner Unterseite über seine gesamte Länge der Fahrzeugscheibe FS benachbart liegt und das am Wischhebel 1 vorgesehene, Wischblatt 1a gegen die Fahrzeugscheibe FS anliegt, in eine Servicestellung schwenkbar (Pfeil A), in der der Wischhebel 1, beispielsweise zum Austauschen des Wischblattes 1 a oder zum manuellen Reinigen der Fahrzeugscheibe, von der Fahrzeugscheibe FS weggeschwenkt ist und mit seiner Längserstreckung schräg zur Ebene der Fahrzeugscheibe orientiert ist.

Der Wischhebelträger 4 besteht bei der dargestellten Ausführungsform im Wesentlichen aus einem hülsenartigen, die Wischerwelle 5 umgreifenden Abschnitt 4.1, der eine Bohrung 4.2 für die Wischerwelle 5 aufweist, sowie aus einem von dem Abschnitt 4.1 wegstehenden gekrümmten Arm 4.3.

Am freien, gabelartig mit zwei parallelen und voneinander beabstandeten Wandabschnitten 6 ausgeführten Ende des Armes 4.3 ist ein Gelenkbolzen 7 vorgesehen, der zusammen mit den Wandabschnitten 6 das dortige Gelenkteil des Gelenkes 3 zwischen dem Wischhebel 1 und dem Wischhebelträger 4 bildet. Der Gelenkbolzen 7 liegt mit seiner Längserstreckung senkrecht zur Ebene der beiden Wandabschnitte 6 und damit auch senkrecht zur Achse der Bohrung 4.3 sowie bei am Fahrzeug montiertem Wischarm 2 parallel zur Ebene der Fahrzeugscheibe FS. Dementsprechend sind die Ebenen der beiden Wandabschnitte 6 parallel zur Achse der Bohrung 4.2 und bei montiertem Wischhebel 1 senkrecht oder annähernd senkrecht zur Ebene der Fahrzeugscheibe FS orientiert. Der Gelenkbolzen 7 erstreckt sich zwischen den beiden Wandabschnitten 6 und geht an beiden Enden jeweils in einen Wandabschnitt 6 über. An der bei montiertem Wischhebel 1 mit dem Fahrzeug näher liegenden Unterseite des Armes 4.3 ist zwischen den beiden Wandabschnitten 6 ein weiterer Steg 8 vorgesehen, an dem die zwischen dem Wischhebel 1 und dem Wischhebelträger 4 wirkende und in der Arbeitsstellung das am Wischhebel 1 vorgesehene Wischblatt 1 a gegen die Fahrzeugscheibe FS andrückende Anpressfeder 9 mit ihrem trägerseitigen Ende eingehängt ist.

Der Wischhebelträger 4 ist mit allen vorgenannten Elementen als Formteil bzw. Spritzgießteil einstückig aus Kunststoff gefertigt. Lediglich die Bohrung 4.2 ist durch eine eingesetzte oder umspritzte Metallhülse 10 verstärkt.

Das Gelenk 3 umfasst weiterhin ein wischarmseitiges, bei der dargestellten Ausführungsform ebenfalls als Formteil bzw. Spritzgießteil aus Kunststoff gefertigtes Gelenkteil 11. Dieses Gelenkteil 11 ist einstückiger Bestandteil des Wischhebels 1, der bei der dargestellten Ausführungsform aus Kunststoff im Wesentlichen als U-Profil mit den beiden Schenkeln 1.1 und dem die beiden Schenkel verbindenden Jochabschnitt 1.2 gefertigt ist. Bei der dargestellten Ausführungsform ist der als Gelenkteil 11 ausgebildete Bereich somit im Wesentlichen auch als ein zur Unterseite des Wischhebels 1 hin offenes U-Profil ausgeführt, und zwar mit zwei Wandabschnitten oder Schenkeln 11.1, die bei am Wischhebelträger 4 montiertem Wischhebel 1 senkrecht zur Achse des Gelenkbolzens 7 orientiert sind. Durch den zwischen den beiden Schenkeln 11.1 gebildeten Raum erstreckt sich dann die Andrückfeder 9 bzw. deren hakenförmig ausgebildetes Einhakteil.

Im Bereich des Gelenkbolzens 7 gehen die Schenkel 11.1 jeweils in einen Wandabschnitt 11.3 über. Die beiden Wandabschnitte 11.3 sind parallel zueinander und voneinander beabstandet vorgesehen, sodass bei in die Servicestellung geschwenktem Wischhebel 11 zwischen diesen Wandabschnitten noch Platz für den Einhakteil der Feder 9 verbleibt. Die Wandabschnitte 11.3 besitzen aber einen im Vergleich zum Abstand der Schenkel 11.1 reduzierten gegenseitigen Abstand und sind bei am Wischhebetträger 4 montiertem Wischhebel 1 zwischen den beiden Wandabschnitten 6 des Armes 4.3 aufgenommen, und zwar derart, dass jeder Wandabschnitt 11.1 mit seiner dem anderen Wandabschnitt 11.1 abgewandten Außenseite gegen eine Innenfläche eines Wandabschnittes 6 anliegt bzw. dieser unmittelbar benachbart ist.

In den Wandabschnitten 11.3, die dann bei am Wischhebelträger 4 montiertem Wischhebel 1 in Ebenen senkrecht zur Achse des Gelenkbolzens 7 liegen, ist jeweils eine Lageröffnung 12 für den Gelenkbolzen 7 vorgesehen. Die beiden mit ihren Achsen achsgleich angeordneten und senkrecht zu den Ebenen der Wandabschnitte 11.3 orientierten Lageröffnungen 12 sind jeweils randseitig offen derart ausgebildet, dass eine Montage des Gelenkteils 11 auf dem Lagerbolzen 7 durch radiales Aufschieben und Einrasten möglich ist. Hierfür ist der mit 13 bezeichnete offene Bereich der beiden Lageröffnungen 12 geringfügig kleiner als der Durchmesser des Lagerzapfens 7.

Eine Besonderheit des Gelenks 3 besteht darin, dass jede Lageröffnung 12 randseitig in einer radial zu ihrer Achse verlaufenden Richtung offen ist, die senkrecht oder etwa senkrecht zur Längserstreckung des Wischhebels 1 orientiert ist. Der offene Bereich 13 jeder Lagerbohrungen 12 befindet sich dem entsprechend bei der dargestellten Ausführungsform an der der Unterseite des Gelenkteils 11 zugewandten Seite der Lageröffnung 12. Jede Lageröffnung 12 bildet hierbei mit ihrem Rand auch zwei in Richtung der Längserstreckung des Wischhebels 1 gegeneinander versetzte und einander gegenüberliegende Bereiche 12.1 und 12.2, mit den sich das Gelenkteil 11 am Lagerzapfen 7 abstützt. Hierdurch werden in Verbindung mit der Abstützung der Wandabschnitte 11.3 an den Wandabschnitten 6 quer zum Wischhebel 1 bzw. tangential zur Achse der Wischerwelle 5 und parallel zur Achse des Gelenks 3 wirkende Kräfte besonders wirksam und sicher vom Wischhebel 1 über das Gelenk 3 auf das Wischhebelträger 4 übertragen. Es hat sich gezeigt, dass durch die beschriebene, spezielle Ausbildung des Gelenks 3 die Belastbarkeit dieses Gelenks gegenüber Gelenken herkömmlicher Wischarme bis zu 25 % gesteigert werden kann.

Bei der dargestellten Ausführungsform geht jede Lageröffnung 12 an ihrem offenen Bereich 13 in eine im jeweiligen Wandabschnitt 11.3 ebenfalls ausgebildete Ausnehmung 14 über, die sich ausgehend vom Bereich 13 etwa bogenförmig in Richtung zur Unterseite des Gelenkteils 11 sowie in Richtung zu dem dem jeweiligen Schenkel 11.1 entfernt liegenden Rand des Wandabschnittes 11.3 erstreckt und an diesem Rand bei 15 offen ist. Dieser offene Bereich 15 liegt der Unterseite des Gelenkteils 11 und damit bei montiertem Wischhebel der Ebene der Fahrzeugscheibe FS näher als der Bereich 13 und die Lageröffnung. 12. Durch die Ausnehmung 14 bildet jeder Wandabschnitt 11.3 an der Unterseite des Gelenkteils 11 eine sich zum freien Ende hin verjüngenden und am offenen Bereich 15 endenden hakenartigen Abschnitt 11.3.1, der seiner Außenseite mit einer Rastnase oder einem Rasthacken 16 versehen ist, der von der Achse der Lagerbohrungen 12 und damit auch von der Achse des Gelenkzapfens 7 radial beabstandet ist. Für diese Rasthacken 16 ist an den einander zugewandten Innenflächen der Wandabschnitte 6 jeweils eine sich um die Achse des Gelenkbolzens 7 erstreckende Vertiefung 17 vorgesehen. Jede Vertiefung 17 ist zwischen ihren beiden Enden 17.1 und 17.2 durch einen Steg 18 unterbrochen. Der Steg 18 bildet eine Gegenrast für den zugehörigen Rasthacken 16.

Bei in Arbeitsstellung befindlichem Wischhebel 1 befindet sich der jeweilige Rasthaken 16 in einer den Steg 18 hintergreifenden Position, d. h. in dem sich zwischen dem Steg 18 und dem dem freien Ende des Armes 4.3 entfernt liegenden Ende 17.1 der Vertiefung 17, sodass ein Wegschwenken des Wischhebels 1 von der Fahrzeugscheibe FS erst durch Vorbeibewegen der Rasthaken 16 an den Stegen 18 und damit erst durch Überwindung einer zusätzlichen Rastkraft möglich ist. Die Rasthacken 16 und Steg 18 bilden somit einen Überrastmechanismus.

Durch die Rasthaken 16 und die Vertiefungen 17 ist weiterhin auch eine definierte Endlage in der Servicestellung erreicht, und zwar dadurch, dass die Rasthaken 16 hierbei gegen das andere Ende 17.2 der jeweiligen Vertiefung 17 zur Anlage kommen.

Die Erfindung wurde voranstehend an einem Ausführungsbeispiel beschrieben. Es versteht sich, dass zahlreiche Änderungen sowie Abwandlungen möglich sind, ohne dass dadurch der die Erfindung tragende Erfindungsgedanke verlassen wird.

So ist es beispielsweise möglich, den Gelenkbolzen 7 abzuflachen, wie dies in den Figuren mit 7.1 angedeutet ist, um so das Aufschieben des Wischhebels 1 auf diesen Gelenkbolzen in der Servicestellung zu erleichtern. Die Abflachung 7.1 liegt dann in einer Ebene senkrecht oder in etwa senkrecht zur Achse der Bohrung 4.2.

### Bezugszeichenliste

- 1: Wischhebel
- 1.1: Schenkel des Wischhebels 1
- 1.2: Jochabschnitt des Wischhebels 1
- 1a: Wischblatt
- 2: Wischarm
- 3: Gelenk
- 4: Wischhebelträger
- 4.1: hülsenartiger Abschnitt des Wischhebelträgers 4
- 4.2: Bohrung des Wischhebelträgers 4
- 4.3: Arm des Wischhebelträgers 4
- 5: Wischerwelle
- 6: Wandabschnitt
- 7: Gelenkbolzen
- 7.1: Abflachung
- 8: Steg
- 9: Anpressfeder
- 10: Metallhülse
- 11: Gelenkteil
- 11.1: Schenkel des Gelenkteils 11
- 11.3: Wandabschnitt
- 11.3.1: hakenförmiger Abschnitt
- 12: Lageröffnung
- 12.1, 12.2: Randbereich der Lageröffnung 12
- 13: offener Bereich der Lageröffnung 12
- 14: Ausnehmung
- 15: offener Bereich der Ausnehmung 14
- 16: Rastnase oder Rasthaken
- 17: Vertiefung
- 17.1, 17.2: Ende der Vertiefung 17
- 18: Steg
- A: Schwenkbewegung des Wischhebels aus der Arbeitsstellung
- in: die Servicestellung
- FS: Fahrzeugscheibe

## Patentansprüche

1. Gelenk (3) zwischen einem Wischhebel (1) und einem an einer Wischerwelle (5) befestigbaren Wischhebelträger (4), zum Schwenken des Wischhebels (1) zwischen einer Arbeitsstellung und einer Servicestellung, mit Gelenkteilen (11, 4.3) am Wischhebel (1) sowie am Wischhebelträger (4), mit einem Gelenkbolzen (7) an einem ersten Gelenkteil (4.3) sowie mit wenigstens einer den Gelenkbolzen (7) aufnehmenden Lageröffnung (12) an einem zweiten Gelenkteil (11), wobei die Lageröffnung (12) zum radialen Aufschieben des zweiten Gelenkteils (11) auf den Lagerzapfen (7) an einem Randbereich (13) seitlich offen ist und an den offenen Bereich (13) anschließend zwei Rand- oder Lagerbereiche (12.1, 12.2) für die Anlage gegen den Lagerzapfen (7) gebildet sind, wobei
zumindest bei in der Arbeitsstellung befindlichem Wischhebel (1) die wenigstens eine Lageröffnung (12) an dem offenen Randbereich (13) in einer radial zur Achse der Lageröffnung (12) verlaufenden, Achsrichtung offen ist, die quer zur Längserstreckung des Wischhebels (1) orientiert ist, **dadurch gekennzeichnet, dass** die beiden Rand- oder Lagerbereiche (12.1, 12.2) einander in Richtung der Längserstreckung des Wischhebels (1) bezogen auf die Achse der Lageröffnung (12) und des Gelenkbolzens (7) bei in der Arbeitsstellung befindlichem Wischhebel (1) diametral gegenüberliegen.

2. Gelenk (3) nach Anspruch 1, **dadurch gekennzeichnet, dass** der offene Bereich (13) der wenigstens einen Lageröffnung (12) derart angeordnet ist, dass diese Lageröffnung zumindest bei in der Arbeitsstellung befindlichem Wischhebel (1) zu dessen Unterseite hin offen ist.

3. Gelenk (3) nach einem der vorhergehenden Ansprüche, **dadurch gekennzeichnet, dass** das erste Gelenkteil (4.3) an einem den Gelenkzapfen (7) aufweisenden Teilabschnitt gabelartig mit zwei parallelen, voneinander beabstandeten Wandabschnitten (6) ausgebildet ist, und dass der Lagerzapfen (7) sich zwischen diesen Wandabschnitten (6) erstreckt.

4. Gelenk (3) nach einem der vorhergehenden Ansprüche, **dadurch gekennzeichnet, dass** das zweite Gelenkteil (11) an einem die wenigstens eine Lageröffnung (12) aufweisenden Teilabschnitt gabelartig mit zwei parallelen, voneinander beabstandeten Wandabschnitten (11.3) ausgebildet ist, und dass in diesen Wandabschnitten (11.3) jeweils eine Lageröffnung (12) vorgesehen ist.

5. Gelenk (3) nach einem der vorhergehenden Ansprüche, **dadurch gekennzeichnet, dass** im Bereich des Lagerzapfens (7) eines der beiden Gelenkteile, beispielsweise das erste Gelenkteil (4.3), das andere Gelenkteil, beispielsweise das zweite Gelenkteil (11), übergreift.

6. Gelenk (3) nach einem der vorhergehenden Ansprüche, **gekennzeichnet durch** zwischen den Gelenkteilen (4.3, 11) wirkende Rastmittel (16, 17, 18), die ein Schwenken des Wischhebels (11) aus der Arbeitsstellung in die Servicestellung nur **durch** Überrasten bzw. nur unter Aufwendung einer zusätzlichen Rastkraft ermöglichen.

7. Gelenk (3) nach Anspruch 6, **dadurch gekennzeichnet, dass** die Rastmittel von wenigstens einer radial von der Achse des Gelenkbolzens (7) beabstandeten Rast (16) und von wenigstens einer mit dieser zusammenwirkenden Gegenrast (18) gebildet sind, wobei die Gegenrast (18) in der Bewegungsbahn der wenigstens einen Rast (16) derart angeordnet ist, dass sich diese in der Arbeitsstellung des Wischhebels (1) auf der einen Seite der Gegenrast (18) und in der Servicestellung auf der anderen Seite der Gegenrast (18) befindet.

8. Gelenk (3) nach einem der vorhergehenden Ansprüche, **dadurch gekennzeichnet, dass** das zweite Gelenkteil (11) gegenüber der Lageröffnung (12) radial versetzt die wenigstens eine Rast (16) aufweist, und dass die Gegenrast (18) an dem ersten Gelenkteil (4.3) vorgesehen ist, und zwar vorzugsweise im Bereich einer einen Bewegungsraum für die Rast (16) bildenden Vertiefung (17) in einem das zweite Gelenkteil (11) seitlich übergreifenden Wandabschnitt (6).

9. Gelenk (3) nach einem der vorhergehenden Ansprüche, **dadurch gekennzeichnet, dass** an den beiden, jeweils eine Lageröffnung (12) aufweisenden Wandabschnitten (11.3) des zweiten Gelenkteils (11) jeweils wenigstens eine mit einer Gegenrast (18) zusammenwirkende Rast (16) vorgesehen ist.

10. Gelenk (3) nach einem der vorhergehenden Ansprüche, **dadurch gekennzeichnet, dass** das erste Gelenkteil Bestandteil des Wischhebelträgers (4) ist, beispielsweise von einem Ende eines armartigen Abschnittes (4.3) des Wischhebelträgers (4) gebildet ist, und dass das zweite Gelenkteil (11) am Wischhebel (1) vorgesehen oder Bestandteil dieses Wischhebels (1) ist.

11. Gelenk (3) nach einem der vorhergehenden Ansprüche, **dadurch gekennzeichnet, dass** der Wischhebelträger (4) einstückig mit dem dortigen Gelenkteil (4.3) beispielsweise aus Kunststoff oder Metall gefertigt ist.

12. Gelenk (3) nach einem der vorhergehenden Ansprüche, **dadurch gekennzeichnet, dass** der Gelenkbolzen (7) abgeflacht ist.

13. Wischarm für Scheibenwischer von Fahrzeugen, mit einem Wischhebelträger (4) und einem über ein Gelenk (3) schwenkbar zwischen einer Arbeitsstellung und einer Servicestellung mit dem Wischhebelträger (4) verbundenen Wischhebel (1), **dadurch gekennzeichnet, dass** das Gelenk (3) einem der vorhergehenden Ansprüche entsprechend ausgebildet ist.

## Claims

1. Link (3) between a wiper lever (1) and a wiper lever carrier (4) capable of being fixed to a wiper shaft (5), for pivoting the wiper lever (1) between a working position and a service position, with retainers (11, 4.3) on the wiper lever (1) and on the wiper lever carrier (4), with a hinge pin (7) on a first retainer (4.3) and with at least one bearing orifice (12) receiving the hinge pins (7) on a second retainer (11), with the bearing orifice (12) being laterally open on a peripheral area for radially push-fitting the second retainer (11) and two peripheral or bearing areas (12.1, 12.2) for resting against the bearing pin (7) are subsequently formed on the open are (13), with at least for the wiper lever (1) situated in the working position, at least one bearing orifice (12) on the open peripheral area (13) is open in an axis direction running radially in relation to the axis of the bearing orifice (12) which is oriented crossways to the longitudinal axis of the wiper lever (1), **characterised in that** the two peripheral or bearing areas (12.1, 12.2) are diametrically opposite to one another with the wiper lever (1) situated in the working position, in relation to the axis of the bearing orifice (12) and the hinge pin (7).

2. Link (3) according to claim 1, **characterised in that** the open area (13) of the at least one bearing orifice (12) is arranged in such a way that this bearing orifice, at least with the wiper lever (1) situated in the working position, is open to the latter's underside.

3. Link (3) according to one of the above claims, **characterised in that** the first retainer (4.3) is designed in the manner of a fork with two parallel wall sections (6) at an interval from one another on one of the partial sections having the hinge pin (7) and that the bearing pin (7) extends between these wall sections (6).

4. Link (3) according to one of the above claims, **characterised in that** the second retainer (11) on one of the partial sections having at least one bearing orifice is designed in the manner of a fork with two parallel wall sections (11.3) and that a bearing orifice (12) is provided in these wall sections (11) respectively.

5. Link (3) according to one of the above claims, **characterised in that** in the area of the bearing pin (7), one of the two retainers, for example the first retainer (4.3), overlaps the other retainer, for example the second retainer (11).

6. Link (3) according to one of the above claims, **characterised by** locking means (16, 17, 18) acting between the retainers (4.3, 11), only allowing pivoting of the wiper lever (11) from the working position to the service position by overlocking or only with application of additional locking force.

7. Link (3) according to claim 6, **characterised in that** the locking means is formed of at least one catch (16) situated radially at a distance from the axis of the hinge pin (7) and of at least one counter-catch (18) interacting with this catch, with the counter-catch (18) being arranged in the path of motion of the at least one catch (16) such that the latter, in the working position of the wiper lever (1) is located on the one side of the counter-catch (18) and in the service position on the other side of the counter-catch (18).

8. Link (3) according to one of the above claims, **characterised in that** the second retainer (11) has the at least one catch (16) radially offset opposite the bearing orifice (12) and that the counter-catch (18 is provided on a first retainer (4.3) and to be more precise preferably in the area of a depression (17) forming an area of movement for the catch (16) in a wall section (6) laterally overlapping the second retainer (11).

9. Link (3) according to one of the above claims, **characterised in that** on both of the wall sections (11.3) of the second retainer (11) respectively having a bearing orifice (12), at least one catch (16) respectively interacting with a counter-catch (18) is provided.

10. Link (3) according to one of the above claims, **characterised in that** the first retainer is a component of the wiper lever carrier (4), is for example formed by an end of the arm-like section (4.3) of the wiper lever carrier (4) and that the second retainer (11) is provided on the wiper lever (1) or is a component of this wiper lever (1).

11. Link (3) according to one of the above claims, **characterised in that** the wiper lever carrier (4) is manufactured in one piece with the retainer (4.3), for example from plastic or metal.

12. Link (3) according to one of the above claims, **characterised in that** the hinge pin (7) is flattened.

13. Wiper arm for vehicle windscreen wipers, with a wiper lever carrier (4) and a wiper lever (1) connected to the wiper lever carrier (4) which can be pivoted by means of a link (3) between a working position and a service position, **characterised in that** the link (3) is designed according to one of the above claims.

## Revendications

1. Articulation (3) entre un levier d'essuie-glace (1) et un support de levier d'essuie-glace (4) pouvant être fixé sur un arbre d'essuie-glace (5), permettant de faire pivoter le levier d'essuie-glace (1) entre une positon fonctionnelle et une position de service, comportant des éléments d'articulation (11, 4.3) sur le levier d'essuie-glace (1) et sur le support de levier d'essuie-glace (4), un boulon d'articulation (7) sur un premier élément d'articulation (4.3) et au moins une ouverture de palier (12) recevant le boulon d'articulation (7) sur un deuxième élément d'articulation (11), moyennant quoi l'ouverture de palier (12) débouche latéralement au niveau d'une zone périphérique (13) afin de pousser radialement le deuxième élément d'articulation (11) sur le tourillon de palier (7) et, sur la zone ouverte (13), sont alors formées deux zones périphériques ou d'appui (12.1, 12.2) permettant le positionnement contre le tourillon d'articulation (7),
moyennant quoi, au moins lorsque le levier d'essuie-glace (1) se trouve dans la position fonctionnelle, la au moins une ouverture de palier (12), au niveau de la zone périphérique ouverte (13), débouche dans une direction axiale s'étendant radialement par rapport à l'axe de l'ouverture de palier (12), qui est orientée transversalement par rapport à l'étendue longitudinale du levier d'essuie-glace (1), **caractérisée en ce que** les deux zones périphériques et/ou d'appui (12.1, 12.2) sont diamétralement opposées dans la direction de l'étendue longitudinale du levier d'essuie-glace (1) par rapport à l'axe de l'ouverture de palier (12) et du boulon d'articulation (7) lorsque le levier d'essuie-glace (1) se trouve dans la position fonctionnelle.

2. Articulation (3) selon la revendication 1, **caractérisée en ce que** la zone ouverte (13) de la au moins une ouverture de palier (12) est disposée de telle sorte que cette ouverture de palier, au moins lorsque le levier d'essuie-glace (1) se trouve dans la position fonctionnelle, débouche vers sa face inférieure.

3. Articulation (3) selon l'une quelconque des revendications précédentes, **caractérisée en ce que** le premier élément d'articulation (4.3) est configuré sur une section partielle présentant le tourillon d'articulation (7), à la manière d'une fourche avec deux sections de paroi (6) parallèles et éloignées l'une de l'autre, et **en ce que** le tourillon de palier (7) s'étend entre ces sections de paroi (6).

4. Articulation (3) selon l'une quelconque des revendications précédentes, **caractérisée en ce que** le deuxième élément d'articulation (11) est configuré sur une section partielle présentant au moins une ouverture de palier (12), à la manière d'une fourche avec au moins deux sections de paroi (11.3) parallèles et éloignées l'une de l'autre, et **en ce que**, dans ces sections de paroi (11.3), est respectivement ménagée une ouverture de palier (12).

5. Articulation (3) selon l'une quelconque des revendications précédentes, **caractérisée en ce que**, dans la zone du tourillon de palier (7), l'un des deux éléments d'articulation, par exemple le premier élément d'articulation (4.3) chevauche l'autre élément d'articulation, par exemple le deuxième élément d'articulation (11).

6. Articulation (3) selon l'une quelconque des revendications précédentes, **caractérisée par** des moyens d'encliquetage (16, 17, 18) agissant entre les éléments d'articulation (4.3, 11), qui permettent un pivotement du levier d'essuie-glace (11) en partant de la position fonctionnelle pour parvenir dans la position de service uniquement grâce à un surencliquetage ou en exerçant une force d'encliquetage supplémentaire.

7. Articulation (3) selon la revendication 6, **caractérisée en ce que** les moyens d'encliquetage sont formés par au moins un élément d'encliquetage (16) éloigné radialement de l'axe du boulon d'articulation (7) et un élément de contre-encliquetage (18) coopérant avec celui-ci, moyennant quoi l'élément de contre-encliquetage (18) est disposé dans la trajectoire de déplacement du au moins un élément d'encliquetage (16) de telle sorte que celui-ci se trouve sur une face de l'élément de contre-encliquetage (18) dans la position fonctionnelle du levier d'essuie-glace (1) et sur l'autre face de l'élément de contre-encliquetage (18) dans la position de service.

8. Articulation (3) selon l'une quelconque des revendications précédentes, **caractérisée en ce que** le deuxième élément d'articulation (11) présente, en étant décalé radialement par rapport à l'ouverture de palier (12), le au moins un élément d'encliquetage (16), et **en ce que** l'élément de contre-encliquetage (18) est prévu sur le premier élément d'articulation (4.3), à savoir de préférence dans la zone d'un renfoncement (17) formant un espace de déplacement pour l'élément d'encliquetage (16), dans une section de paroi (6) chevauchant latéralement le deuxième élément d'articulation (11).

9. Articulation (3) selon l'une quelconque des revendications précédentes, **caractérisée en ce que**, sur les deux sections de paroi (11.3) présentant respectivement une ouverture de palier (12), du deuxième élément d'articulation (11), est prévu respectivement au moins un élément d'encliquetage (16) coopérant avec l'élément de contre-encliquetage (18).

10. Articulation (3) selon l'une quelconque des revendications précédentes, **caractérisée en ce que** le premier élément d'articulation fait partie du support du levier d'encliquetage (4), est formé par exemple par une extrémité d'une section de type bras (4.3) du support du levier d'essuie glace (4), et **en ce que** le deuxième élément d'articulation (11) est prévu sur le levier d'essuie-glace (1) ou fait partie de ce levier d'essuie-glace (1).

11. Articulation (3) selon l'une quelconque des revendications précédentes, **caractérisée en ce que** le support du levier d'essuie-glace (4) est réalisé en une seule pièce avec l'élément d'articulation (4.3) situé à cet emplacement, par exemple en matière plastique ou en métal.

12. Articulation (3) selon l'une quelconque des revendications précédentes, **caractérisée en ce que** le boulon d'articulation (7) est aplani.

13. Porte-balai destiné à des essuie-glaces de véhicules, comportant un support de levier d'essuie-glace (4) et un levier d'essuie-glace (1) relié par l'intermédiaire d'une articulation (3) de manière pivotante entre une position fonctionnelle et une position de service au support du levier d'essuie-glace (4), **caractérisé en ce que** l'articulation (3) est configurée selon l'une quelconque des revendications précédentes.
